# EUROPÄISCHE PATENTANMELDUNG

(11) **EP 0 823 209 A2**
(43) Veröffentlichungstag der Anmeldung: **11.02.1998**
(21) Anmeldenummer: 97111362.6
(22) Anmeldetag: 04.07.1997
(51) Int. Cl.: A01L 5/00

(54) **Hufbeschlag**

(30) Priorität: 07.08.1996 DE 29613691 U
(71) Anmelder: Wilden GmbH & Co. KG, 92507 Nabburg (DE)
(72) Erfinder: Zeller, Hans-Günther, Dr., 79639 Grenzach-Wyhlen (DE); Wilden, Hans, 92507 Nabburg (DE); Birner, Alfred, 92536 Pfreimd (DE)
(74) Vertreter: Schmidt, Horst, Dr.

(57) **Zusammenfassung**

Ein Hufbeschlag aus Kunststoffmaterial zur Befestigung am Huf eines Pferdes mittels Nägeln, mit einer Laufseite (4) und einer im wesentlichen ebenen Auflageseite (3) für den Huf, hat einen wenigstens zweischichtigen Laminataufbau, bestehend aus einer aus einem formstabilen Kunststoffmaterial gebildeten Oberschicht (1), die die Hufauflageseite (3) aufweist, und einer aus einem Kunststoffmaterial mit geringerer Härte als die der Oberschicht gebildeten Unterschicht (2), die die Laufseite (4) aufweist. Eine biegeweiche Querverbindung (12-15) kann nahe bei oder an den freien Enden (11) der Schenkelbereiche (8) vorgesehen sein. Die Querverbindung (12-15) umfasst einen den Strahl des Hufes untergreifenden Bereich (15), der über die Ebene der Auflageseite (3) der Oberschicht (1) hinausragt.

## Beschreibung

Die Erfindung betrifft einen Hufbeschlag aus Kunststoffmaterial zur Befestigung am Huf eines Pferdes mittels Nägeln gemäss dem Oberbegriff des Anspruches 1. Die Erfindung betrifft insbesondere einen Vollkunststoff-Hufbeschlag von geringem Gewicht, guter stossdämpfender Eigenschaft, verbesserter Rutsch- und Abriebsfestigkeit und Anpassbarkeit an die physiologischen Gegebenheiten des Hufes.

Bekannt sind Hufbeschläge aus einer Kombination Metall mit Kunststoff (EP-B-425459, DE-U-9412097, EP-B-308309, EP-A-662282). Einige dieser Hufbeschläge können ähnlich wie ein herkömmliches Hufeisen beim Beschlagen gehandhabt werden, wobei die metallische Einlage den notwendigen festen Halt für den Hufnagel sichert. Das Kunststoffmaterial dient in erster Linie der Trittdämpfung und zur Erhöhung der Rutschfestigkeit. Ist das Kunststoffmaterial fest mit der metallischen Einlage verbunden, geht allerdings der Vorteil herkömmlicher Hufeisen verloren, dass der Hufschmied durch Erwärmung des Eisenmaterials eine Feinanpassung des Hufbeschlages an den Pferdehuf vornehmen kann. Wesentlicher Nachteil aus der Verwendung von Metallen ist das hohe Gewicht der bekannten Hufbeschläge. Bekannt sind ferner Vollkunststoff-Hufbeschläge (DE-U-9409971, DE-U-9412221, EP-B-277979, DE-A-4404160) aus nur einem Kunststoffmaterial, zumeist PUR oder einem Elastomer. Ein im Hinblick auf gute Dämpfungseigenschaft und ausreichende Rutsch-/Abriebsfestigkeit konzipierter Vollkunststoff-Hufbeschlag hat demzufolge notwendigerweise eine geringe Eindruckfestigkeit an der Seite, die mit dem Huf in Verbindung kommt. Dies kann zu einem Verkümmern der sog. Trachten des Hufes führen, die eine harte Auflage benötigen. Ausserdem bereiten die bekannten Vollkunststoff-Hufbeschläge Schwierigkeiten beim Annageln am Huf, da die Hufnägel häufig keinen ausreichend festen Halt im nachgiebigen Material finden und leicht locker werden können.

Der Erfindung liegt die Aufgabe zugrunde, einen Vollkunststoff-Hufbeschlag zu schaffen, der bei ausreichender Rutsch-/Abriebsfestigkeit und guter dämpfender Eigenschaft den physiologischen Gegebenheiten des Hufes Rechnung trägt und ohne Schwierigkeiten mittels Hufnägeln am Huf befestigt werden kann.

Diese Aufgabe wird durch den kennzeichnenden Teil des Anspruches 1 gelöst. Danach stellt der erfindungsgemässe Hufbeschlag ein wenigstens zweischichtiges Laminat dar, bei dem eine Oberschicht aus einem härteren Kunststoffmaterial besteht und auf einer Unter- oder Laufschicht aus einem Kunststoffmaterial mit geringerer Härte aufgebracht ist. Die Oberschicht kann eine ebene glatte Auflagefläche für den Huf aufweisen, die infolge der Härte des Kunstoffmaterials sich ähnlich wie ein metallisches Hufeisen verhält, indem das Kunststoffmaterial ein Eindrücken des Huftragrandes in die Oberschicht verhindert und damit einem Verkümmern der Trachten wirksam entgegengetreten wird. Andererseits kann die Unterschicht im Hinblick auf eine ausreichende Dämpfungseigenschaft sowie Rutsch- und Abtriebsfestigkeit weitgehend kompromisslos konzipiert werden. Z.B. kann die Unterschicht so elastisch ausgebildet werden, dass die im Winter gefürchtete Stollenbildung vermieden wird. Infolge der Härte der Oberschicht ist die Haftfestigkeit für Hufnägel beim erfindungsgemässen Hufbeschlag stets ausreichend. Eine gefürchtete Lockerung der Verbindung zwischen Hufbeschlag und Hufnägel, wie sie bei bekannten Vollkunststoff-Hufbeschlägen eintreten kann, wird daher vermieden. Gemäss einer bevorzugten Weiterbildung der Erfindung besteht wenigstens die Oberschicht, vorzugsweise jedoch sowohl die Ober- als auch die Unterschicht, aus einem wärmeformbaren Kunststoffmaterial. Der Hufschmied kann daher, ähnlich wie bei einem bekannten Hufeisen, eine Feinanpassung des Hufbeschlages an den jeweiligen Huf dadurch vornehmen, dass er den Hufbeschlag soweit erwärmt, dass eine plastische Verformung wenigstens des Oberschichtmaterials vorgenommen werden kann. Nach Erkalten des Kunststoffmaterials bleibt die gewählte Form erhalten. Gemäss einer anderen bevorzugten Weiterbildung der Erfindung können die Schenkelbereiche des Hufbeschlages nahe bei oder an deren freien Enden durch eine biegeweiche Querverbindung miteinander verbunden sein, die einen den Strahl des Hufes untergreifenden Bereich umfassen kann. Dieser Bereich kann den Hufstrahl flächig bedecken und darauf wie bei einem natürlichen Auftritt eines unbeschlagenen Hufes auf einen Untergrund wachstumsfördernde Reize ausüben. Aufgrund seiner Konzeption kann der erfindungsgemässe Hufbeschlag in besonders wirtschaftlicher Weise durch Zweikomponentenspritzgiessen hergestellt werden. Bezüglich anderer Weiterbildungen der Erfindung wird auf die Ansprüche verwiesen.

Die Erfindung wird nachfolgend anhand einer Ausführungsform und der Zeichnung näher erläutert. Es zeigen:
- Fig. 1: in Unteransicht einen erfindungsgemäss aufgebauten Hufbeschlag,
- Fig. 2: den Hufbeschlag nach Fig. 1 in Draufsicht,
- Fig. 3: eine Seitenansicht des Hufbeschlages bei Betrachtung in Richtung auf seinen Stegbereich, und
- Fig. 4: eine geschnittene Detailansicht längs der Schnittlinie IV-IV in Fig. 1.

Der erfindungsgemässe Hufbeschlag ist ein Laminat aus Schichten, bestehend aus unterschiedlich harten Kunststoffmaterialien, ohne Verwendung von metallischen Einlagen, wobei die Schichten grundsätzlich in irgendeiner geeigneten Weise, z.B. durch Kleben, Heissversiegeln etc., fest miteinander verbunden sind. Vorzugsweise wird das Laminat durch Zweikomponentenspritzgiessen von unterschiedlichen wärmeformbaren Kunststoffmaterialien geschaffen. Dieses Verfahren ist dem Fachmann grundsätzlich bekannt und braucht daher hier nicht näher erläutert zu werden.

Obschon die Erfindung nachfolgend anhand eines Lamninates mit zwei Schichten, nämlich einer Oberschicht 1 und einer Unterschicht 2 beschrieben wird, ist die Erfindung hierauf nicht beschränkt. Wenn erwünscht, könnten zwischen der Ober- und Unterschicht 1, 2 auch weitere Schichten, z.B. zur Erhöhung der Dämpfungseigenschaft oder Formstabilität des Hufbeschlages vorgesehen sein.

Während an das Material und den Aufbau der Oberschicht 1 in erster Linie die Anforderung an eine den physiologischen Gegebenheiten des Hufes optimal angepasste Abstützung des Hufes und ein gute Haltfestigkeit für die durch das Laminat getriebenen Hufnägel gestellt wird, sollte die Unterschicht 2 bei guter Abriebsfestigkeit insbesondere eine ausreichende dämpfende Eigenschaft besitzen. Ein wesentlicher Gesichtspunkt der Erfindung ist daher die Ausbildung der Oberschicht 1 aus einem formstabilen Kunststoffmaterial mit geeigneter Shore-Härte, die grösser als die des Kunststoffmaterials ist, aus dem die Unterschicht 2 gebildet ist. Insbesondere sollte die Oberschicht 1 eine Shore-Härte zwischen 50 D und 100 D, gemessen nach DIN 5305 haben, wobei eine Shore-Härte von 60 D bis etwa 90 D bevorzugt wird. Die Unterschicht 2 sollte dagegen eine Shore-Härte zwischen 20 A und 100 A, gemessen nach der vorher erwähnten DIN-Norm haben, wobei eine Shore-Härte von 40 A bis 80 A bevorzugt wird.

Obschon andere Kunststoffmaterialien verwendet werden können, sind bevorzugte Kunststoffmaterialien: Polyurethan (PUR), Polyamid (PA), Polypropylen (PP) sowie thermoplastische Elastomere, wie Ethylenbuthylenstyrol (SEBS) und Ethylenpropylendienmonomer (EPDM), mit oder ohne Faserverstärkung, sowie Mischungen davon. Folgende Materialkombinationen für die Oberschicht 1 und Unterschicht 2 haben sich als besonders vorteilhaft erwiesen:

| Oberschicht 1/Shore-Härte | Unterschicht 2/Shore-Härte |
|---|---|
| PUR/60 D | PUR/80 A |
| PUR, glasfaserverstärkt/70 D - 85 D | PUR/80 A |
| PA Typ 6, glasfaserverstärkt | SEBS/bis 95 A |
| | PP/EPDM/ca. 50 D |
| PA Typ 66 | SEBS/bis 95 A |
| | PP/EPDM/ca. 50 D |

Bei den vorerwähnten Kunststoffmaterialien handelt es sich um wärmeformbare Materialien, die durch Spritzgiessen bei unterschiedlichen Temperaturen verarbeitet werden können. Es könnten für die Ober- und Unterschicht 1, 2 jedoch auch nicht wärmeformbare Kunststoffmaterialien verwendet werden, sofern diese mit unterschiedlichem Härtegrad eingestellt werden können und die wesentlichen Eigenschaften, d.h. ausreichende hohe mechanische Stabilität, gute Abriebsfestgkeit und gutes Dämpfungsverhalten erhalten bleiben.

Die Dicke der Laminatschichten, welche die Ober- bzw. Unterschicht 1, 2 des Hufbeschlages bilden, kann in weiten Grenzen variieren. Auch kann sich die Schichtdicke der Oberschicht 1 von derjenigen der Unterschicht 2 unterscheiden. Vorzugsweise liegt die Schichtdicke für die Ober- bzw. Unterschicht 1, 2 jeweils zwischen etwa 3 und 12 mm, wobei höchstvorzugsweise jede Schicht eine Dicke zwischen 5 und 9 mm, insbesondere etwa 7 mm, haben kann.

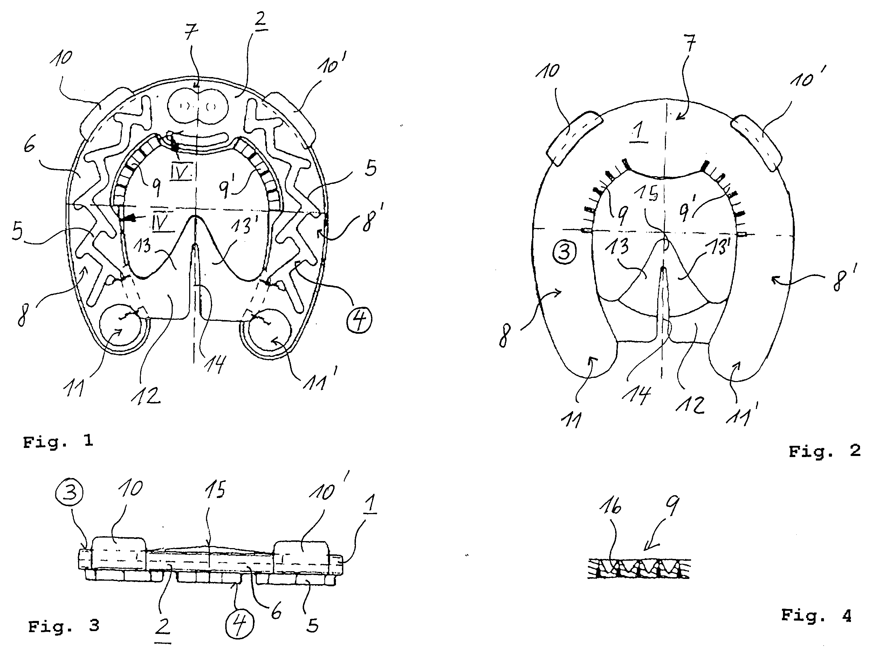

Wie Fig. 1 und 3 zeigen, weist die Unterschicht 2 längs der Schenkelbereiche 8, 8' des Hufbeschlages eine geeignete Profilierung in Form durchgehender oder unterbrochener Stege 5 auf, die von einem Basisbereich 6 der Unterschicht 1 nach unten abstehen und an ihren freien Oberflächen die Lauffläche 4 des Hufbeschlages bilden. Von der Gesamtdicke der Unterschicht 2 können die Stege 5 etwa zwischen 1/2 und 2/3 einnehmen. Die Erfindung ist auf die in der Zeichnung dargestellten Konfiguration und Anordnung der Profilierung nicht beschränkt. Anderere geeignete Profilierungen können ebenfalls vorgesehen werden. Im Bereich der freien Enden 11, 11' der Schenkelbereiche 8, 8' kann, wie dargestellt, die Profilierung auch kreisringförmig ausgebildet sein. Eine ähnliche kreisringförmige Profilierung kann an einer zentralen Stelle des Stegbereiches 7 des Hufbeschlages vorgesehen sein. Der Basisbereich 6 der Unterschicht 2 steht in unmittelbarem Kontakt mit der Oberschicht 1 und stellt eine sich koextensiv dazu erstreckende Lage dar.

Wie in Fig. 2 gezeigt ist, hat die Oberschicht 1 eine im wesentlichen ebene glatte Oberfläche, die die Auflagefläche 3 für den Huf des Pferdes bildet. Beidseitig und in gleichem Winkelabstand zu der Symmetrielinie des Hufbeschlages sind aussenumfänglich der Oberschicht 1 Anlageelemente 10, 10' angeformt, die um ein geeignetes Mass über die Auflagefläche 3 hinausragen und eine genaue Positionierung des Pferdehufes in Bezug auf die Auflagefläche 3 der Oberschicht 1 erleichtern.

Wie in Fig. 1 und 2 dargestellt ist, ist zwischen den Schenkelbereichen 8, 8' des Hufbeschlages eine Querverbindung 12 vorgesehen, die vorzugsweise integrales Teil der Unterschicht 2 darstellt, jedoch auch an der Oberschicht 1 oder an beiden Schichten angeformt sein könnte. Die Querverbindung 12 ist durch eine zentrale Ausnehmung 14 in zwei Abschnitte oder Flügel 13, 13' unterteilt, die an einem Scheitelbereich 15 miteinander verbunden sind. Der Scheitelbereich 15 liegt an einer zentralen Stelle auf der Symmetrielinie des Hufbeschlages unterhalb des Strahles des Hufes, so dass der Scheitelbereich 15 mit dem Hufstrahl in Berührung treten kann. Zur Verbesserung der Berührung zwischen dem Hufstrahl und dem Scheitelbereich 15 kann vorgesehen sein, dass die Querverbindung 12 nicht in der Ebene der Unterschicht 2 sondern unter einem geringen spitzen Winkel dazu liegt, so dass der Scheitelbereich 15 etwas oberhalb der Ebene der Auflagefläche 3 der Oberschicht 1 zu liegen kommt.

Die Aussparung 14 verleiht der Querverbindung 12 eine ausreichende Biegeweichheit, so dass der Abstand der Schenkelbereiche 8, 8' des Hufbeschlages mit mässiger Kraft gegen den elastischen Widerstand der Querverbindung 12 verändert werden kann.

Eine weitere Massnahme zur erleichterten Änderung des Abstandes der Schenkelbereiche 8, 8' voneinander ist in Gestalt profilierter Abschnitte 9, 9' an den Innenseiten der Schenkelbereiche 8, 8' nahe dem Stegbereich 7 vorgesehen. Die profilierten Abschnitte 9, 9' bewirken, dass die Schenkelbereiche 8, 8' im Verhältnis zum Stegbereich 7 voneinander weg und aufeinander zu gebogen werden können, ohne dass hierzu ein übermässiger Kraftaufwand erforderlich ist. Vorzugsweise haben die profilierten Abschnitte 9, 9' ein Zick-Zack- oder Harmonika-Profil, wie es in Fig. 2 bei 16 angedeutet ist. Wie dargestellt, nehmen die profilierten Abschnitte 9, 9' nur einen geringen Teil, z.B. 1/5 der Querschnittsabmessung des betreffenden Schenkelbereiches 8, 8' ein.

Der wie vorbeschrieben ausgebildete Hufbeschlag kann ähnlich wie die bekannten metallischen Hufeisen vom Hufschmied gehandhabt werden. Der Hufschmied wird aus einer Reihe vorgefertigter Hufbeschläge mit unterschiedlichen Standardbasisabmessungen einen solchen auswählen, der den Abmessungen des zu beschlagenden Pferdehufes am nächsten kommt. Die Feinanpassung an den Huf kann dadurch erfolgen, dass der Hufbeschlag z. B. in einem Wasserbad oder dergleichen erwärmt wird, um das Kunststoffmaterial in einen Zustand zu bringen, bei dem die Schenkelbereiche 8, 8' mit geringem Kraftaufwand bleibend gebogen werden können, um sie an die lateralen Abmessungen des jeweiligen Hufes anzupassen. Nach Erkalten des Kunststoffmaterials bleibt die eingestellte Form erhalten. Wegen der Festigkeit und Härte der Oberschicht 1 können Hufnägel herkömmlicher Art zur Befestigung des Hufbeschlages am Pferdehuf verwendet werden. Einschränkungen hinsichtlich der Position der Hufnägel längs des Hufbeschlages bestehen nicht.

Obschon die Erfindung vorausgehend an Hand einer bevorzugten Ausführungsform beschrieben wurde, versteht es sich, dass sie hierauf nicht beschränkt ist. Wenn erwünscht, kann z.B. die Querverbindung 12 entfallen, so dass der Hufbeschlag im wesentlichen der Konfiguration eines herkömmlichen Hufeisens entsprechen würde.

## Patentansprüche

1. Hufbeschlag aus Kunststoffmaterial zur Befestigung am Huf eines Pferdes mittels Nägeln, mit einer Laufseite (4) und einer im wesentlichen ebenen Auflageseite (3) für den Huf, gekennzeichnet durch einen wenigstens zweischichtigen Laminataufbau, bestehend aus einer aus einem formstabilen Kunststoffmaterial gebildeten Oberschicht (1), die die Hufauflageseite (3) aufweist, und einer aus einem Kunststoffmaterial mit geringerer Härte als die der Oberschicht gebildeten Unterschicht (2), die die Laufseite (4) aufweist.

2. Hufbeschlag nach Anspruch 1, dadurch gekennzeichnet, dass die Oberschicht (1) und die Unterschicht (2) jeweils eine Dicke im Bereich zwischen 3 und 12 mm, vorzugsweise 5 und 9 mm, höchst vorzugsweise etwa 7 mm, haben.

3. Hufbeschlag nach Anspruch 1 oder 2, dadurch gekennzeichnet, dass die Oberschicht (1) eine Shore-Härte (DIN 53505) zwischen 50D und 100D, und die Unterschicht (2) eine Shore-Härte zwischen 20A und 100A hat.

4. Hufbeschlag nach einem der vorhergehenden Ansprüche, dadurch gekennzeichnet, dass wenigstens die Oberschicht (1) aus einem wärmeformbaren Kunststoffmaterial gebildet ist.

5. Hufbeschlag nach Anspruch 4, dadurch gekennzeichnet, dass das wärmeformbare Kunststoffmaterial Polyurethan, Polymamid, ein Elstomermaterial odere ein Gemisch davon umfasst.

6. Hufbeschlag nach Anspruch 4 oder 5, dadurch gekennzeichnet, dass die Oberschicht (1) faserverstärkt ist.

7. Hufbeschlag nach einem der vorhergehenden Ansprüche, dadurch gekennzeichnet, dass die Unterschicht (2) aus einem Kunststoffmaterial gebildet ist, das Pulyurethan und Polypropylen umfasst.

8. Hufbeschlag nach einem der vorhergehenden Ansprüche, gekennzeichnet durch eine biegeweiche Querverbindung (12-15) der Schenkelbereiche (8) des Hufbeschlages nahe bei oder an deren freien Enden (11).

9. Hufbeschlag nach Anspruch 8, dadurch gekennzeichnet, dass die Querverbindung (12-15) integral mit der Unterschicht (2) verbunden ist.

10. Hufbeschlag nach Anspruch 8 und 9, dadurch gekennzeichnet, dass die Querverbindung (12-15) einen den Strahl des Hufes untergreifenden Bereich (15) umfasst, der über die Ebene der Auflageseite (3) der Oberschicht (1) hinausragt.

11. Hufbeschlag nach einem der vorhergehenden Ansprüche, dadurch gekennzeichnet, dass die Schenkelbereiche (8) des Hufbeschlages nahe dessen Stegbereich (7) biegeweiche, eine Biegung der Schenkelbereiche aufeinander zu bzw. voneinander weg fördernde Abschnitte (9) aufweisen.
